# EUROPEAN PATENT APPLICATION

(11) **EP 4 790 158 A1**
(43) Date of publication of application: **12.08.2026**
(21) Application number: 26156939.6
(22) Date of filing: 06.02.2026
(51) Int. Cl.: C22B 3/08, C22B 3/10, C22B 3/32, C22B 3/38, C22B 3/42, C22B 3/44, C22B 7/00, C22B 15/00, C22B 21/00, C22B 3/00, C22B 26/10, C22B 26/12

(54) **PROCESS FOR RECOVERING VALUABLE METALS FROM BLACK MASS**

(30) Priority: 06.02.2025 FI 20255096
(71) Applicant: NORILSK NICKEL HARJAVALTA OY, 29200 Harjavalta (FI)
(72) Inventor: SUHONEN, Virginie, 29200 Harjavalta (FI); THITZ, Oskari, 29200 Harjavalta (FI); KELLOKUMPU, Marko, 29200 Harjavalta (FI); KALLIOINEN, Jani, 29200 Harjavalta (FI); LINDELL, Esa, 28360 Pori (FI)
(74) Representative: Berggren Oy

(57) **Abstract**

The invention relates to a process for recovering valuable metals from black mass. The process comprises leaching the black mass by a strong acid and a reductant, one or more of precipitating impurities from the leachate stream by using oxidation and adjusting pH and extracting impurities by solvent extraction, and separating a first stream of valuable metals by solvent extraction.

## Description

### Technical field

The invention relates to a process for recovering valuable metals from black mass. The process comprises leaching the black mass by a strong acid and a reductant, one or more of precipitating impurities from the leachate stream by using oxidation and adjusting pH and extracting impurities by solvent extraction, and separating a first stream of valuable metals by solvent extraction.

### Background

The increasing need for rechargeable batteries in, e.g., portable devices and vehicles, increases the need for suitable active materials for batteries. At the same time, the environmental concern establishes a need for efficient recycling processes for end-of-life batteries. Intergovernmental legislation will require a higher percentage of battery materials to originate from recycled sources in the future.

Processes for recycling battery materials, such as black mass, are known. However, recovering valuable metals from end-of-life batteries is complicated due to the complicated composition of the active battery materials. Recovering valuable metals with current processes is expensive. There is also a need for recycling processes providing the valuable metals at a higher yield and purity. Existing processes suffer from high losses of valuable metals in the impurity removal stage. Therefore, processes with improvements in the impurity removal are needed.

### Summary

An object of the invention is to reduce or even eliminate the drawbacks found in the prior art.

Particularly, an object of the invention is to provide an efficient process for recovering valuable metals from black mass, i.e., black mass recycling. A further object of the invention is to provide a process where the yield and purity of the valuable metals, especially of cobalt, manganese, and nickel, are increased.

The invention is defined by what is recited in the independent claim. Embodiments or examples of the invention are presented in the dependent claims.

Any embodiments or examples of the invention presented herein that are specified with the open term "comprise" may be further limited with a closed term "consisting of".

All embodiments or examples of the invention are mutually freely combinable, unless otherwise indicated. The presented embodiments and examples of the invention are applicable to all aspects of the invention.

A process for recovering valuable metals from black mass is presented. The process comprises
a. leaching, comprising
   a.1.leaching the black mass by a strong acid and a reductant, thus producing a solid leaching residue and a leachate stream;
   followed by
b. removing impurities, comprising one or more of
   b.1. precipitating impurities from the leachate stream by using oxidation and adjusting pH, thus producing a solid impurity residue and a supernatant stream, and
   b.2. extracting impurities by solvent extraction from the supernatant stream using an impurity extractant, thus producing an impurity-containing solution or a plurality of impurity-containing solutions and a first extraction raffinate;
      followed by
c. recovering a first stream of valuable metals, comprising
   c.1. separating a first stream of valuable metals by solvent extraction from the first extraction raffinate using a valuable metal extractant, thus producing said first stream of valuable metals and a second extraction raffinate,
wherein the first stream of valuable metals comprises at least copper, and may further comprise manganese and/or cobalt.

In the presented process, the process steps are carried out in the sequence they are presented in. In other words, the leaching at a. is followed by removing impurities at b. The impurity removal at b. may comprise the precipitation at b.1, the extraction at b.2, or both. The impurity removal at b. is subsequently followed by recovering the first stream of valuable metals at c.

Black mass should be understood as a powder originating from batteries or their manufacturing process, particularly lithium-ion batteries such as nickel-cobalt-manganese (NCM) batteries and nickel-cobalt-aluminium (NCA) batteries. Despite being an example of lithium ion batteries, lithium iron phosphate (LFP) batteries are outside the scope of this specification since their recycling process differs from that of NCM or NCA batteries. Black mass comprises a mixture of battery materials, such as cathode active materials, anode materials, or both. Cathode materials are often present in the black mass as oxides. Materials of end-of-life rechargeable batteries may be recycled. The recycling process may comprise collecting and fully discharging the battery. Materials like foils, electrolytes and plastics may be physically separated from the electrode materials during the recycling process. The battery material may undergo a thermal pretreatment, wherein, e.g., binder materials and fluorides may be at least partially removed from the battery material. After the thermal treatment, the black mass is mostly comprised of the remaining electrode materials, such as valuable metals originating from cathode active materials and graphite originating from the anode. Thus, the black mass comprises valuable metals along with graphite and elements with lesser commercial value. Black mass may alternatively or in addition also comprise materials recycled from the manufacturing process of lithium ion batteries, such as surplus materials, off-spec materials, scrap materials, or any combination thereof. Off-spec materials comprise materials, or even finished battery products, that do not pass a performance or quality test during the manufacturing process. Scrap materials comprise materials that are discarded during the manufacturing process, such as precursors of cathode active materials. The black mass may thus comprise precursors of cathode active materials, anode materials, or both, in addition to the previously mentioned cathode active materials, anode materials, or both.

Within the course of this specification, at least nickel, lithium, cobalt, copper, and manganese should be understood as valuable metals.

The presented process comprises removing impurities at b. At least iron, aluminium, and fluoride should be understood as impurities. Sodium may also be considered an impurity. However, sodium may also be added to the process stream as a counterion of, e.g., bases when adjusting the pH of the process stream. Sodium may partially be removed when removing impurities at b. However, the main purpose of the impurity removal at b. is to remove the above-mentioned impurities iron, aluminium, and fluoride. In other words, the impurities to be removed at b. may be individually selected from a group comprising iron, aluminium, fluoride, sodium, and any combination thereof. Importantly, neither manganese nor copper should be understood as impurities in the course of the present specification. Manganese and copper are mainly not removed from the process stream at b., but only later in the process as valuable metals at c.

The method presents recovering a first stream of valuable metals at c. The first stream of valuable metals comprises at least copper. In addition to copper, the first stream of valuable metals may further comprise manganese and/or cobalt.

The presented method provides advantages of both improved yields and improved product purities for the recovered valuable metals. The method may utilize solvent extraction at b. to remove impurities and at c. to separate the first stream of valuable metals. Separating the impurities at least partially by solvent extraction is highly exclusive against the desired valuable metals. In other words, the desired valuable metals are excluded from the impurity removal phase of the process, i.e., they remain in the main process stream to a high degree. On the other hand, separating the first stream of valuable metals by solvent extraction is highly selective towards the desired valuable metals, and co-extraction of undesired elements is low. This enables to separate each valuable metal at a higher purity compared to precipitation-based methods, where co-precipitation of undesired elements is practically unavoidable. The undesired elements may include here any valuable metals that may optionally be recovered from the second extraction raffinate at a later point of the process. The presented process may decrease valuable metal losses especially in the impurity removal stage of the recovery process.

### Brief description of the drawings

- Figure 1: presents a schematical diagram of processes according to the invention.
- Figure 2: presents a schematical diagram of processes according to embodiments of the invention.
- Figure 3: presents a schematical diagram of processes according to embodiments of the invention.
- Figure 4: presents a schematical diagram of processes according to embodiments of the invention.
- Figure 5: presents a schematic diagram of process steps according to embodiments of the invention.

### Detailed description

The presented process for recovering valuable metals from black mass comprises or consists of leaching at a., followed by removing impurities at b., followed by recovering a first stream of valuable metals at c.

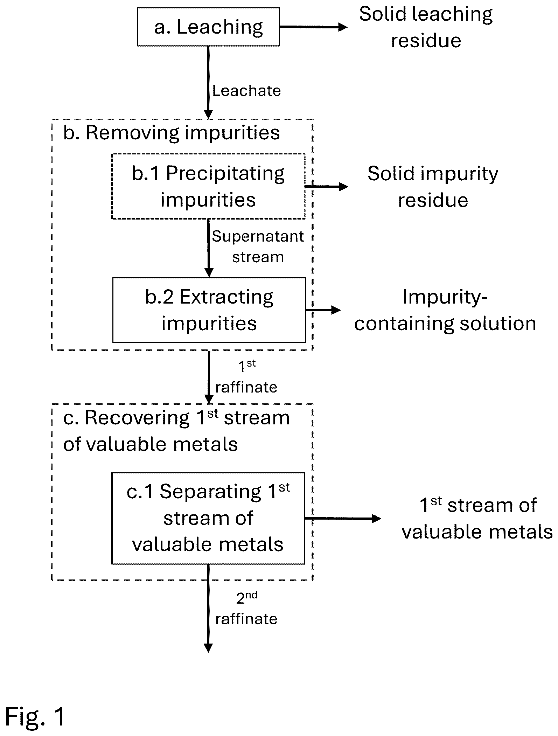

Referring to Figures 1-4, the process for recovering valuable metals from black mass may comprise leaching at a. The leaching may comprise or consist of leaching the black mass by a strong acid and a reductant. Thus, a solid leaching residue and a leachate stream are produced. The leachate stream may comprise the valuable metals of the black mass. The solid leaching residue may be mostly comprised of graphite that may be purified and recycled further.

The process is a solution-based process, particularly a hydrometallurgical process. The process comprises separating several impurity and valuable metal fractions from the black mass leachate. The leachate and all subsequent solutions (e.g., the first, second, and third raffinates as well as the remnant stream) may be jointly termed a process stream, or a main process stream. The separated streams, such as the first and second streams of valuable metals may be termed side streams. The first stream of valuable metals may contain one or more of copper, manganese, and cobalt. The second stream of valuable metals may comprise one or more of at least nickel and lithium. Furthermore, the stream comprising at least manganese and cobalt, being separated further from the first stream of valuable metals, may be termed a side stream. The second stream of valuable metals may comprise any of the nickel-containing solution, the lithium-containing solution, or the Li- and Na-containing solution obtained at the nickel recovery at d. and/or at the lithium recovery at e.

The process may further comprise filtering to separate the solid leaching residue from the liquid leachate stream. Thus, the leachate stream may be a solids-free solution.

The strong acid used for the leaching at a.1 may be selected from the group comprising sulphuric acid, hydrochloric acid, and any combination thereof. Preferably, the strong acid used at a.1 is sulphuric acid. A sulphate-based process is less prone to, e.g., corrosion problems than a chloride-based process that involve the use of hydrochloric acid as the leaching acid. Amount of the strong acid at the leaching at a.1 may be selected such that an efficient leaching is achieved, while optimizing acid usage in terms of, e.g., process economy and cost. pH of the process stream at the leaching at a.1 may be selected in the range of 1-5.

The reductant used for the leaching at a.1 may be selected from the group comprising sulphur dioxide, hydrogen peroxide, and any combination thereof. Preferably, the reductant is sulphur dioxide SO₂. The reductant may aid in dissolving the black mass through reductive mechanisms. Especially oxides may be dissolved with the aid of the reductant. Particularly when sulphuric acid is selected as the strong acid for the leaching, the choice of sulphur dioxide as the reductant may provide several advantages. Consumption of the sulphuric acid may be reduced when choosing sulphur dioxide as the reductant. Furthermore, sulphur dioxide oxidises to sulphate anions during the leaching process. Thus, a common anion system is established in the process stream. In other words, no additional ions are introduced into the process stream, whereby the process stream remains more simple in composition. Recycling of the process chemicals becomes easier thanks to the reduced risk of contamination of the process liquids with foreign anions.

The leaching at a.1 may further comprise adding an oxygen-containing gas, such as air. Adding the oxygen-containing gas has several advantages. The oxygen-containing gas may alter the reduction potential at the leaching. Adding the oxygen-containing gas may further oxidize at least a part of surplus reductant present in the process stream, thus simplifying the composition of the process stream. Furthermore, adding the oxygen-containing gas at a.1 may already contribute to oxidation of iron (see below). The selection of air as the oxygen-containing gas is beneficial thanks to its abundancy, ease of accessibility, and safety when handling.

Still referring to Figures 1-4, the process may comprise removing impurities at b. The impurity removal at b. may be comprised of one or two stages. In other words, the impurity removal at b. may comprise or consist of precipitating impurities at b.1, extracting impurities at b.2, or both. Furthermore, the impurity extraction at b.2 may be arranged as one or two extractions.

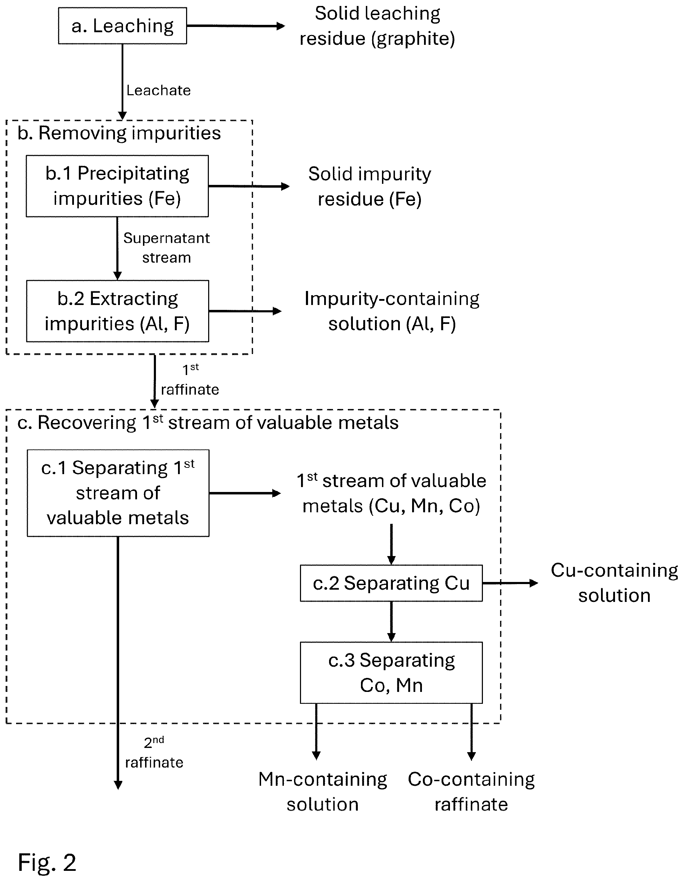

Referring to Figure 2, the impurity precipitation at b.1 may comprise or consist of precipitating impurities from the leachate stream by using oxidation and adjusting pH. Thus, a solid impurity residue and a supernatant stream are produced. The supernatant stream may comprise the valuable metals of the black mass. The solid impurity residue may be comprised mostly of iron. Thus, the precipitation of impurities at b.1 may be understood an iron-removal process producing an iron-depleted stream.

Adjusting the pH at b.1 may be carried out by adding a base. In other words, adjusting the pH may comprise or consist of increasing the pH. The base may be selected from the group comprising hydroxides, such as sodium hydroxide, lithium hydroxide, potassium hydroxide, ammonium hydroxide, or any combination thereof. More preferably, the base is sodium hydroxide. pH of the process stream at the impurity removal at b.1 may be selected in the range of 3-6.

The oxidation at b.1 may be carried out by adding one or more selected from the group comprising an oxygen-containing gas, such as air, peroxides, chlorates, persulphates, and any combination thereof. Preferably, the oxidation is carried out by adding an oxygen-containing gas, such as air. Air is efficient as an oxidant, and its abundancy, ease of accessibility, and safety when handling makes it a desirable choice for the oxidation.

In the oxidation at b.1, iron may be oxidised into the ferric, i.e., Fe(III) state, which may then precipitate out of the supernatant solution due to the increase in pH. The precipitation of iron may be essentially quantitative, i.e., essentially all iron originally present in the black mass may be removed from the process stream at b.1. Removal of iron prior to recovery of the valuable metals provides the advantage of improving the efficiency of valuable metal recovery as well as improved purity of the recovered valuable metals.

The process may further comprise filtering to enhance the separation of the solid impurity residue from the supernatant stream. Thus, the supernatant stream may be a solids-free solution.

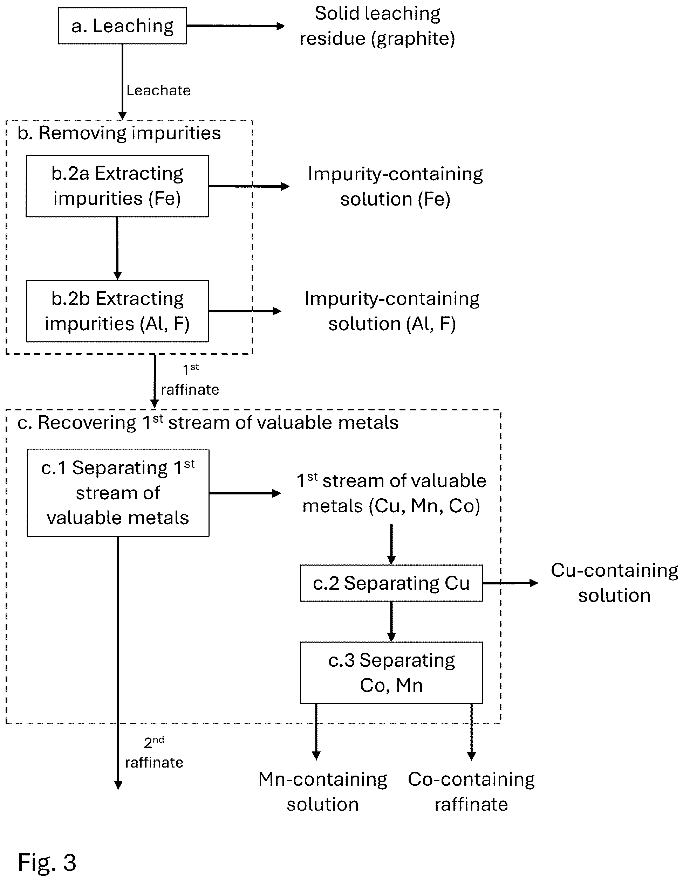

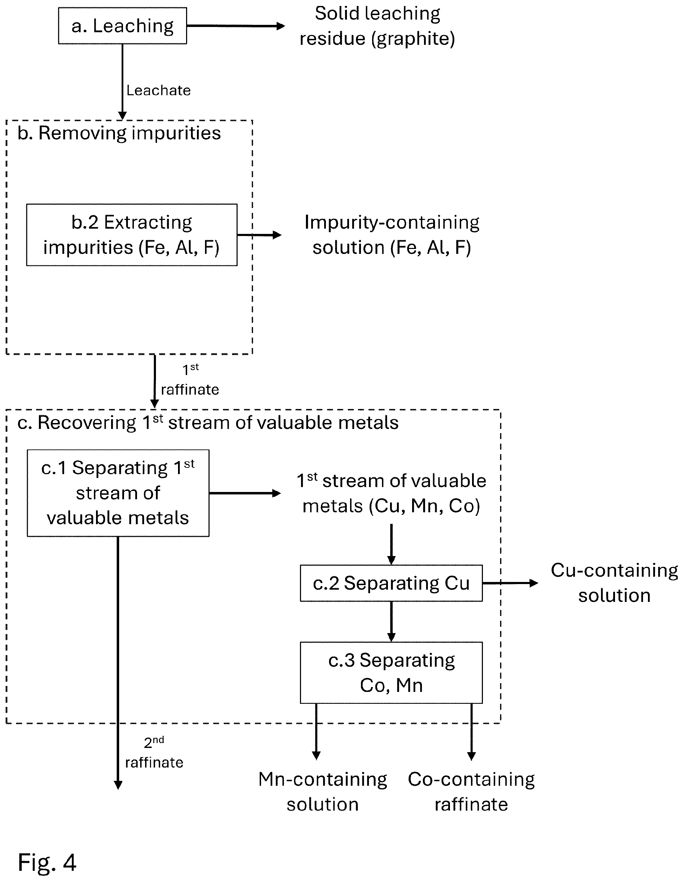

Referring to Figures 2-4, the impurity extraction at b.2 may comprise or consist of extracting impurities by solvent extraction from the leachate stream, from the supernatant stream, or both, using an impurity extractant. Thus, an impurity-containing solution or a plurality of impurity-containing solutions and a first extraction raffinate are produced. The impurity removal at b.2 may be a liquid-liquid extraction process, where the impurity extractant is selected such that it selectively separates remaining impurities from the valuable metals. The impurity extraction at b.2 may be arranged as one or two extractions. The impurity extraction at b.2 may comprise or consist of an iron extraction (Fe extraction) at b.2a (Figure 3), an Al-F extraction at b.2b (Figure 3), and/or a joint Fe-Al-F extraction at b.2 (Figure 4).

The removing of impurities at b. may comprise or consist of the precipitation of impurities at b.1, followed by extracting aluminium and fluoride by solvent extraction from the supernatant stream using the impurity extractant at b.2b. Thus, the impurity-containing solution or the plurality of impurity-containing solutions and the first extraction raffinate are produced.

Alternatively or in addition, the removing of impurities at b. may comprise or consist of extracting iron by solvent extraction from the leachate stream at b.2a, using a first impurity extractant, thus producing an iron-containing solution and an iron-depleted stream, followed by extracting aluminium and fluoride by solvent extraction from the iron-depleted stream at b.2b using a second impurity extractant, thus producing the impurity-containing solution or the plurality of impurity-containing solutions and the first extraction raffinate.

Alternatively or in addition, the removing of impurities at b. may comprise or consist of extracting iron, aluminium and fluoride by solvent extraction from the leachate stream at b.2, using the impurity extractant, thus producing the impurity-containing solution or the plurality of impurity-containing solutions and the first extraction raffinate.

Referring to Figure 3, the impurity extraction at b.2a may be directed to separating iron from the leachate stream, i.e., iron extraction, producing an iron-depleted stream. This iron extraction may be carried out at a pH selected in the range of 1-4. The iron extraction may produce an impurity-containing solution containing iron, for example as sulphates or chlorides. Thus, the impurity extractant may be selected such that selective extraction of iron from the leachate stream is achieved.

Referring to Figure 3, the impurity extraction at b.2b may alternatively or additionally be directed to separating aluminium together with fluoride from the iron-depleted stream, whereby the extraction may be termed Al-F extraction. The Al-F extraction, whether carried out on the iron-depleted stream obtained by precipitation or iron extraction, may produce an impurity-containing solution containing aluminium-fluoride salts, preferably sulphates. Thus, the impurity extractant may be selected such that selective extraction of aluminium and fluoride from the iron-depleted stream is achieved. The impurity-containing solution may be purified and processed further to extract the aluminium and fluoride as, e.g., cryolite (Na₃AlF₆, sodium hexafluoroaluminate). Removal of impurities by solvent extraction at b.2 provides the advantage of reducing valuable metal losses at the impurity-removal stage. Furthermore, co-extraction of valuable metals at b.2 (particularly of cobalt and nickel) is negligible (< 1 wt-%), thus increasing the yield of valuable metals later in the process. pH of the process stream at the Al-F extraction at b.2 may be selected in the range of 2-4. The Al-F extraction may be combined with iron removal by precipitation (Figure 2) or by solvent extraction (Figure 3).

Referring to Figure 4, the impurity extraction at b.2 may alternatively be directed to separating iron together with aluminium and fluoride in one solvent extraction step from the leachate stream. Thus, the impurity extraction at b.2 may thus be termed a Fe-Al-F extraction. The impurity extractant may be selected such that selective extraction of iron, aluminium and fluoride from the leachate stream is achieved. pH of the process stream at the Fe-Al-F extraction at b.2 may be selected in the range of 2-4.

The impurity extraction at b.2 may comprise adding a base. The base is preferably selected from the group comprising hydroxides, such as sodium hydroxide, lithium hydroxide, potassium hydroxide, ammonium hydroxide, or any combination thereof. The impurity extraction at b.2 may comprise adding a strong acid. The strong acid is preferably selected from the group comprising sulphuric acid, hydrochloric acid, and any combination thereof.

The impurity-containing solution or the plurality of impurity-containing solutions obtained at b.2 may optionally be purified and used further. For example, aluminium and fluoride may be separated from the impurity-containing solution or the plurality of impurity-containing solutions, either the Fe-Al-F containing solution or the Al-F containing solution, thus producing an aluminium-containing solution and a fluoride-containing solution. When handling the Fe-Al-F solution, also an iron-containing solution may be obtained. Any of these solutions may be further purified and/or the aluminium, fluoride, and/or iron contained in the solutions may be retrieved in solid form by, e.g., precipitation or crystallization, for further use.

Importantly, none of the valuable metals is being removed from the process stream at b. in a significant amount. The vast majority of the valuable metals is recovered later in the process (see below). Particularly, the impurity removal stage at b does not aim to separate significant amounts of manganese or copper from the process stream. Careful selection of the pH at the impurity removal stage ensures a minimal loss of valuable metals at this process stage.

Still referring to Figures 1-4, the process may comprise recovering a first stream of valuable metals at c. Recovering the first stream of valuable metals may comprise or consist of, at c.1, separating the first stream of valuable metals by solvent extraction from the first extraction raffinate using a valuable metal extractant. Thus, said first stream of valuable metals and a second extraction raffinate are produced. The second extraction raffinate may also contain valuable metal, particularly nickel and lithium. The extraction of the first stream of valuable metals at c.1 may thus be a second solvent extraction within the course of the process flow (the impurity solvent extraction(s) at b.2 being the first). The first stream of valuable metals comprises at least copper, and may further comprise manganese and/or cobalt.

Copper is mainly not removed from the process stream at b., but as a valuable metal at c. Majority of the copper originally present in the leachate is carried through the impurity removal at b. to the valuable metal separation at c. In other words, at least 60 wt-%, preferably at least 70 wt-%, more preferably at least 80 wt-%, even more preferably at least 90 wt-%, or most preferably at least 95 wt-% of copper originally present in the leachate may be present in the first stream of valuable metals. Thus, copper will mainly remain in the process stream until the valuable metal separation at c. The higher amounts of copper carried through the impurity removal stage to the valuable metal separation at c. may provide a higher overall yield of copper.

Additionally, manganese and/or cobalt, if present in the black mass, will mainly remain in the process stream until the separation at c.3. At least 95 wt-%, preferably at least 97 wt-%, or most preferably at least 99 wt-% of the manganese originally present in the leachate may be present in the first stream of valuable metals. Likewise, at least 95 wt-%, more preferably at least 97 wt- %, or most preferably at least 99 wt-% of the cobalt originally present in the leachate may be present in the first stream of valuable metals.

The impurity extractant and the valuable metal extractant may individually be selected from the group comprising phosphinic acids. Preferably, the impurity extractant and the valuable metal extractant may individually be selected from dialkyl phosphinic acids. More preferably, the impurity extractant and/or the valuable metal extractant is bis(2,4,4-trimethylpentyl)phosphinic acid.

In particularly preferred processes, the same extractant is selected as the impurity extractant individually at any of b.2, b.2a, and b.2b, and as the valuable metal extractant at c.1. More precisely, the same extractant may be selected as the Al-F extractant at b.2 (Figure 2) and as the valuable metal extractant at c.1. Alternatively, the same extractant may be selected as the Fe extractant at b.2a (Figure 3), as the Al-F extractant at b.2b (Figure 3), and as the valuable metal extractant at c.1. Alternatively, the same extractant may be selected as the Fe-Al-F extractant at b.2 (Figure 3) and as the valuable metal extractant at c.1. Contamination of the valuable metal extractant by the impurity extractant may be avoided by selecting the same extractant as the impurity extractant and as the valuable metal extractant. Thus, use of the same extractant at the impurity extraction at b. and at the extraction of the first stream of valuable metals at c. may eliminate cross-contamination of extractants, whereby a high separation efficiency of the valuable metals from each other at c. may be maintained. The elimination of cross-contamination also enables using a single extractant batch for a longer time, providing environmental and financial advantages. Furthermore, using the same extractant at b. and c. removes the need for a separate organic material removal step between the extractions at b. and c.

Separating the first stream of valuable metals at c.1 may comprise adding a base. The base is preferably selected from the group comprising hydroxides, such as sodium hydroxide, lithium hydroxide, potassium hydroxide, ammonium hydroxide, or any combination thereof. Separating the first stream of valuable metals at c.1 may further comprise adjusting pH by adding a strong acid. The strong acid is preferably selected from the group comprising sulphuric acid, hydrochloric acid, and any combination thereof. pH of the process stream at c.1 may be selected in the range of 4-6.

Referring to Figures 2-4, the recovering the first stream of valuable metals at c. may further comprise, at c.2, separating copper from the first stream of valuable metals. Separating the copper at c.2 may preferably be performed by ion exchange. The ion exchange may comprise first adsorbing the copper into an ion exchange resin, followed by releasing the copper from the ion exchange resin to provide a copper-containing solution. In processes comprising the copper separation at c.2 and the optional manganese separation at c.3 *(vide infra),* the first stream of valuable metals comprises at least copper, manganese and cobalt. Thus, a copper-containing solution and a stream comprising at least manganese and cobalt is produced. The copper separation is carried out from the first stream of valuable metals, i.e., from a side stream (in terms of flow volumes), whereas conventional processes typically involve separation of copper from the main process stream earlier in the process, as part of the impurity removal stage. Thus, the copper separation may be carried out by smaller equipment than in conventional processes. Even though the yield of recovered copper may slightly decrease compared to conventional methods, the product purity of copper may increase with the presented method. Further, separation of the copper from a side stream at c.2 instead of the main stream may increase the product yields of other valuable metals, such as manganese, cobalt, and nickel.

Separating the copper at c.2 may be performed using an ion exchange resin selected from the group comprising weak acid cation exchange resins. Suitable weak acid cation exchange resins include resins utilizing iminodiacetic acid groups in a styrenic matrix. The ion exchange resin may be used in its hydrogen form. The ion exchange may comprise first adsorbing copper contained in the first stream of valuable metals into the ion exchange resin as copper ions, followed by washing and releasing or eluding the copper ions from the ion exchange resin into the copper-containing solution.

Separating the copper at c.2 may further comprise adding a strong acid. The strong acid may be used to elude the copper ions from the ion exchange resin into the copper-containing solution. The acid addition may ensure that the ion exchange resin is maintained in its hydrogen form. Preferably, the strong acid is selected from the group comprising sulphuric acid, hydrochloric acid, and any combination thereof. pH of the process stream entering the ion exchange resin may be in the range of 2-5.

Still referring to Figures 2-4, the recovering the first stream of valuable metals at c. may further comprise, after c.2, separating manganese and cobalt from the stream comprising at least manganese and cobalt at c.3. In other words, the manganese and cobalt contained in the stream comprising at least manganese and cobalt may be separated from each other at c.3. Separating the manganese and cobalt at c.3 is preferably performed by solvent extraction using a manganese extractant. Thus, a manganese-containing solution and a cobalt-containing raffinate are produced. The manganese extractant may be selected from the group comprising di(2-ethylhexyl)phosphoric acid, di(2-ethylhexyl)phosphonic acid, and any combination thereof. Preferably, the manganese extractant is di(2-ethylhexyl)phosphoric acid. The use of di(2-ethylhexyl)phosphoric acid provides an efficient separation of manganese and cobalt from each other.

Extracting the manganese and cobalt from each other at c.3 may further comprise adding a base. The base may be selected from the group comprising hydroxides, such as sodium hydroxide, lithium hydroxide, potassium hydroxide, ammonium hydroxide, or any combination thereof. Extracting the manganese and cobalt from each other at c.3 may further comprise adjusting pH by adding a strong acid. Preferably, the strong acid is selected from the group comprising sulphuric acid, hydrochloric acid, and any combination thereof. pH of the process stream at c.3 may be selected in the range of 2-4.

Alternatively, the stream comprising at least manganese and cobalt obtained at c.2 may be utilized further as is, if desired. Thus, processes that do not comprise the extraction of manganese and cobalt at c.3 may be provided. Then, a mixture of manganese and cobalt may be provided. The mixture of manganese and cobalt, for example in the form of a solid mixture of manganese and cobalt, may be recovered from the stream comprising at least manganese and cobalt by conventional methods, such as crystallization or precipitation.

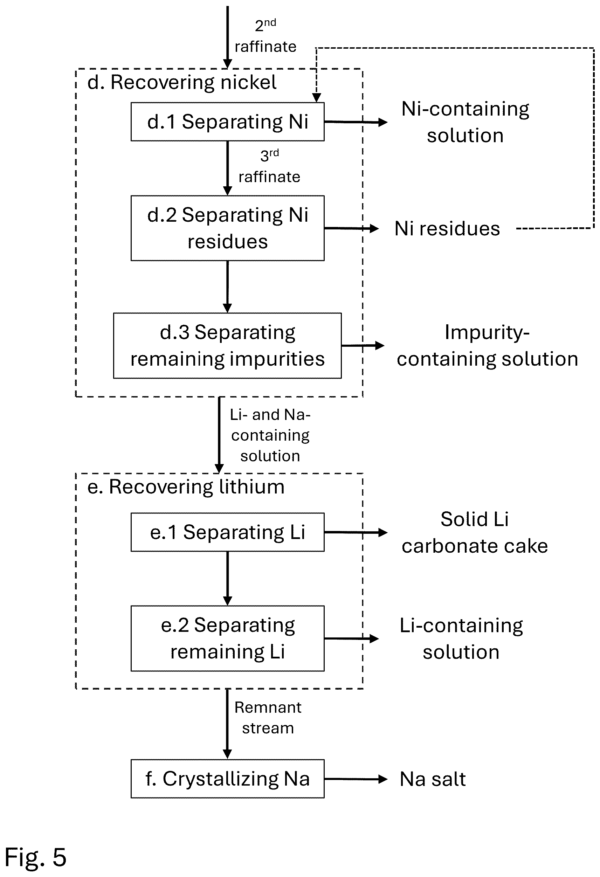

The process may further comprise recovering a second stream of valuable metals from the second extraction raffinate. The second stream of valuable metals may comprise one or more of at least nickel and lithium, as presented in Figure 5. Recovering the second stream of valuable metals may comprise or consist of one or more of recovering nickel at d. and recovering lithium at e. The second stream of valuable metals may comprise any of the nickel-containing solution, the lithium-containing solution, or the Li- and Na-containing solution obtained at the nickel recovery at d. and/or at the lithium recovery at e.

Recovering nickel may comprise or consist of separating nickel from the second extraction raffinate by solvent extraction at d.1. The nickel separation at d.1 may be performed using a nickel extractant. Thus, a nickel-containing solution and a third extraction raffinate are produced.

The nickel extractant may be selected from the group comprising phosphinic acids, phosphonic acids, phosphoric acids, neodecanoic acid, and any combination thereof. Preferably, the nickel extractant is selected from the group comprising dialkyl phosphinic acids, dialkyl phosphonic acids, dialkyl phosphoric acids, neodecanoic acid, and any combination thereof. More preferably, the nickel extractant is selected from bis(2,4,4-trimethylpentyl)phosphinic acid, di(2-ethylhexyl)phosphonic acid, di(2-ethylhexyl)phosphoric acid, and neodecanoic acid. The preferred extractants may be efficient for separating nickel from the second extraction raffinate.

Recovering the nickel at d. may further comprise separating nickel residues from the third extraction raffinate by ion exchange at d.2. The ion exchange may comprise first adsorbing the nickel residues into an ion exchange resin, followed by washing and releasing the nickel residues from the ion exchange resin. The ion exchange at d.2 to separate nickel residues may be performed using an ion exchange resin selected from the group comprising weak acid cation exchange resins. Suitable weak acid cation exchange resins include resins utilizing iminodiacetic acid groups in a styrenic matrix. The nickel residues released from the ion exchange resin at d.2 may further be fed back upstream in the process, such as to the nickel solvent extraction at d.1.

Each of separating the nickel by solvent extraction at d.1 and by ion exchange at d.2 may individually further comprise adding a base. The base may be selected from the group comprising hydroxides, such as sodium hydroxide, lithium hydroxide, potassium hydroxide, ammonium hydroxide, or any combination thereof. Each of separating the nickel by solvent extraction at d.1 and by ion exchange at d.2 may individually further comprise adjusting pH by adding a strong acid. The strong acid is preferably selected from the group comprising sulphuric acid, hydrochloric acid, and any combination thereof. pH of the process stream at d.1 may be selected in the range of 4-8. pH of the process stream entering the ion exchange resin at d.2 may be selected in the range of 4-6. pH of the solution exiting the ion exchange resin at d.2 may be selected in the range of 2-3.

Referring to Figure 5, recovering the nickel at d. may further comprise separating remaining impurities from the solution exiting the ion exchange resin at d.2 by ion exchange at d.3. More precisely, the remaining impurity removal at d.3 may comprise separating the remaining impurities from the solution that has undergone the ion exchange at d.2. The ion exchange at d.3 may comprise first adsorbing the remaining impurities into an ion exchange resin, followed by washing and releasing the remaining impurities from the ion exchange resin to provide an impurity-containing solution. The remaining impurities removed at d.3 may include, e.g., magnesium and calcium. Thus, an impurity-containing solution, such as a Mg- and Ca-containing solution, may be produced.

The remaining impurity removal at d.3 may further comprise adding a base. The base may be selected from the group comprising hydroxides, such as sodium hydroxide, lithium hydroxide, potassium hydroxide, ammonium hydroxide, or any combination thereof. The remaining impurity removal at d.3 may further comprise adjusting pH by adding a strong acid. The strong acid is preferably selected from the group comprising sulphuric acid, hydrochloric acid, and any combination thereof.

The ion exchange at the remaining impurity removal at d.3 may be carried out using an ion exchange resin selected from the group comprising weak acid cation exchange resins.

The solution exiting the ion exchange resin at d.2 and/or d.3 may comprise at least lithium and sodium. Therefore, it may be termed a Li- and Na-containing solution.

Referring to Figure 5, the process may further comprise recovering lithium at e. The lithium recovery at e. may comprise or consist of separating lithium from the third extraction raffinate at e.1. More precisely, the lithium recovery may comprise separating lithium from the third extraction raffinate that has undergone the nickel residue removal ion exchange at d.2 and/or the remaining impurity removal ion exchange at d.3. Lithium may be separated from the third extraction raffinate at e.1 by precipitating using an alkali metal carbonate. The alkali metal carbonate may preferably be selected from the group comprising sodium carbonate, potassium carbonate, or any combination thereof. More preferably, the alkali metal carbonate is sodium carbonate. Thus, a solid lithium carbonate cake and a remnant stream are produced.

The lithium recovery at e. may optionally further comprise separating remaining lithium from the remnant stream by ion exchange at e.2. The ion exchange may comprise first adsorbing the remaining lithium into an ion exchange resin, followed by releasing the remaining lithium from the ion exchange resin to provide a lithium-containing solution. Thus, a lithium-containing solution and a purified remnant stream are produced.

The ion exchange at the remaining lithium removal at e.2 may be carried out using an ion exchange resin selected from the group comprising weak acid cation exchange resins.

Referring to Figure 5, the process may further comprise crystallizing sodium at f. from the remnant stream or the purified remnant stream obtained at e.1 or e.2, respectively. Thus, a sodium salt may be produced. The anion in the sodium salt may conveniently be a conjugate base of the strong acid used for leaching at a.1. Thus, in preferred processes, wherein sulphuric acid is used as the strong acid at a.1, the sodium salt is sodium sulphate.

In the presented process, one or more of
- separating impurities at any of b.1, b.2, b.2a, and b.2b,
- separating a first stream of valuable metals at c.1,
- separating copper at c.2,
- separating manganese and cobalt at c.3,
- separating nickel at d.1, and
- separating nickel residues at d.2
may further comprise adding a base. The base is preferably selected from the group comprising hydroxides, such as sodium hydroxide, lithium hydroxide, potassium hydroxide, ammonium hydroxide, or any combination thereof.

Similarly, one or more of
- separating impurities at any of b.2, b.2a, and b.2b,
- separating a first stream of valuable metals at c.1,
- separating copper at c.2,
- separating manganese and cobalt at c.3,
- separating nickel at d.1, and
- separating nickel residues at d.2
may comprise adjusting pH by adding a strong acid. Preferably, the strong acid is selected from the group comprising sulphuric acid, hydrochloric acid, and any combination thereof.

For process economy and environmental reasons, it is beneficial to keep the composition of the process stream as simple as possible. In other words, it is beneficial to keep the number of different ionic species in the process stream to a minimum. Recycling and reuse of the process chemicals becomes easier thanks to the reduced risk of contamination of the process liquids with foreign anions. Thus, the process may be compatible with the concept of circular economy. For example, it may be beneficial to select the same acid as the strong acid in every process step in the main process stream, thus eliminating the introduction of additional (or in other words, foreign) ions into the main process stream. Sulphate-based process is preferred for, e.g., corrosion-preventing reasons, as discussed above regarding the leaching step a.2. Likewise, it is beneficial to select the same base as the base in every process step. Lithium-based, sodium-based, and potassium-based processes are preferred.

The process may further comprise electrolytic recycling of one or more of sodium, lithium and potassium by, e.g., bipolar electrodialysis. Bipolar electrodialysis may be used to split salts, such as the sodium, lithium and/or potassium salts generated in the process, producing acid and basic streams. The electrolytic recycling process renders the valuable metal recovery process compatible with the concept of circular economy.

### Examples

### Example 1: Leaching

Black mass from lithium ion battery recycling was slurried in an agitated vessel using water and leachate solution in a ratio of 245 g black mass per one litre of liquid. Black mass slurry was then pumped at a flow of 3.3 I/h into a feeding tank and further into the first agitated, atmospheric reactor. The black mass was leached with sulphuric acid together with sulphur dioxide and air. Continuous leaching consisted of three overflowing reactors with size of 9 litre each at temperature of about 65°C. Total flow of sulphuric acid was 1.9 I/h at concentration of 250 g/l, total sulphur dioxide gas flow was 0.8 I/min and air flow was 0.7 I/min. After the third leaching reactor, solution with unreacted solids overflowed to filtration feeding tank and it was filtered in batches using Büchner funnel filter to separate filtrate from the leaching residue. Metal content of the leachate and leaching residue cake was analysed using inductive coupled plasma optical emission spectroscopy (ICP-OES), and the result is shown in Table 1 and Table 2. Leaching yield of the cathode active material (CAM) metals was over 99 %, expressed individually for each (CAM) metal as mass of said valuable metal in the leachate compared to the mass of said valuable metal originally contained in the black mass.

**Table 1. Concentrations of elements in the leachate.**

| **Element** | **Unit** | **Leachate** |
|---|---|---|
| **Al** | mg/l | 638 |
| **Co** | mg/l | 31 160 |
| **Cu** | mg/l | 243 |
| **Fe** | mg/l | 277 |
| **Mn** | mg/l | 30 610 |
| **Ni** | mg/l | 29 130 |
| **Li** | mg/l | 10 770 |

**Table 2. Composition of the black mass and the leaching residue cake as mass percentage after drying.**

| **Element** | **Unit** | **Black mass** | **Filter cake** |
|---|---|---|---|
| **Al** | % | 0.36 | 0.06 |
| **Co** | % | 12.4 | 0.05 |
| **Cu** | % | 0.14 | 0.01 |
| **Fe** | % | 0.28 | 0.04 |
| **Mn** | % | 11.7 | 0.02 |
| **Ni** | % | 13.3 | 0.08 |
| **Li** | % | 4.2 | 0.03 |

### Example 2: Impurity removal by precipitation

Leachate was purified using continuous precipitation with three nine litres, series connected, agitated, atmospheric tanks. Tanks were heated to 55°C - 63°C and air flow into the bottom of the tanks was 0.7 I/min to ensure iron to be in Fe(III) form. Precipitation was controlled by adding 100 g/l NaOH to adjust pH to 3.5 in the first tank and 4.1 in the two last tanks. In the filter feeding tank pH was 4.3. Average total flow for leachate was 3.4 I/h and total flow of NaOH was 0.07 I/h. Iron seeds were mixed into leachate prior feeding to the first precipitation tank (68 g/h of dry seeds). Iron seeds contained a small amount of impurities as shown in Table 4. Solid precipitation was filtered using Büchner funnel filter. Metal content of the solutions and solid impurity residue cake was analysed using inductive coupled plasma optical emission spectroscopy (ICP-OES), and the result is shown in Table 3 and Table 4. Iron concentration in the purified solution, i.e., supernatant stream, was below 1 mg/l.

**Table 3. Concentrations of elements in the feed leachate prior to the precipitation and in the supernatant stream.**

| **Element** | **Unit** | **Leachate** | **Supernatant stream** |
|---|---|---|---|
| **Al** | mg/l | 628 | 404 |
| **Co** | mg/l | 32 000 | 30 550 |
| **Cu** | mg/l | 332 | 305 |
| **Fe** | mg/l | 37 | < 1 |
| **Mn** | mg/l | 18 490 | 18 190 |
| **Ni** | mg/l | 25 970 | 24 970 |
| **Li** | mg/l | 8 380 | 7 980 |

**Table 4. Composition of the iron seeds and the solid impurity residue as mass percentage after drying.**

| **Element** | **Unit** | **Seeds** | **Solid impurity residue** |
|---|---|---|---|
| **Al** | % | 0.1 | 0.9 |
| **Co** | % | 0.3 | 0.5 |
| **Cu** | % | 0.3 | 0.4 |
| **Fe** | % | 31.6 | 29.9 |
| **Mn** | % | < 0.1 | 0.1 |
| **Ni** | % | 0.3 | 0.8 |
| **Li** | % | < 0.1 | 0.1 |

### Example 3: Impurity removal by precipitation

Leachate solution with added iron and aluminium was purified in a batch precipitation using agitated glass reactor. At the beginning 0.5 litre of leachate was heated in the reactor to 80 °C and 11 g of solid seeds were added to the solution. Then pH was adjusted slowly to value 4.0 using 60 g/l NaOH solution in an automatic titrator. Total NaOH solution consumption was 130 ml, and after 300 minutes precipitation time, the solution and precipitate were separated using Büchner funnel filter. Metal content of the leachate, supernatant stream and solid impurity residue was analysed using inductive coupled plasma optical emission spectroscopy (ICP-OES), and the result is shown in Table 5 and Table 6. Iron in the purified solution was 11 mg/l and over 99 % of the iron was removed from the leachate solution.

**Table 5. Concentrations of elements in the leachate with added aluminium and iron, and in the supernatant stream.**

| **Element** | **Unit** | **Leachate** | **Supernatant stream** |
|---|---|---|---|
| **Al** | mg/l | 3 269 | 1 175 |
| **Co** | mg/l | 13 118 | 9 466 |
| **Cu** | mg/l | 313 | 219 |
| **Fe** | mg/l | 2 546 | 11 |
| **Mn** | mg/l | 6 304 | 4 660 |
| **Ni** | mg/l | 13 223 | 9 442 |
| **Li** | mg/l | 6 816 | 4 207 |

**Table 6. Composition of the iron seeds and the solid impurity residue as mass percentage after drying.**

| **Element** | **Unit** | **Seeds** | **Solid impurity residue** |
|---|---|---|---|
| **Al** | % | 0.1 | 4.1 |
| **Co** | % | 0.2 | 0.3 |
| **Cu** | % | 0.1 | 0.2 |
| **Fe** | % | 32.8 | 26.9 |
| **Mn** | % | < 0.1 | 0.1 |
| **Ni** | % | 0.6 | 0.6 |
| **Li** | % | < 0.1 | 0.2 |

### Example 4: Impurity removal by solvent extraction

Solvent extraction (SX) process to separate aluminium and fluoride from the iron removed black mass leachate (supernatant stream) is exemplified below.

Black mass solution from which iron was removed to 1 mg/l or below and aluminium sulphate was added, was fed into solvent extraction process to separate aluminium and fluorine from the aqueous solution. Separation is a solvent extraction process in which the organic phase contains 30 mass-% of bis(2,4,4-trimethylpentyl)phosphinic acid extractant in organic diluent (de-aromatised hydrocarbon solvent). Continuous solvent extraction was done in a laboratory scale solvent extraction setup using three mixer-settler units (mixer volume 1.0 l and settler volume 2.5 I) at temperature of 48 °C. Organic phase was pre-neutralised in batches using 14.6 g of sodium hydroxide per one litre of organic solution prior feeding to the extraction process. All three mixer-settlers were used for extraction. Flow of the aqueous phase was 0.63 I/h and organic phase 0.74 I/h, giving external organic to aqueous ratio of 1.2. Output solution, 1^{st} raffinate was at pH value 3.4. Inductive coupled plasma optical emission spectroscopy (ICP-OES) and combustion ion chromatography (CIC for fluorine) analyses of the supernatant stream and the 1^{st} raffinate are shown in Table 7. Aluminium was extracted over 99% and fluoride over 97 % from the aqueous phase and for instance, nickel losses were negligible (significantly below 1 %), even without any scrubbing of the loaded organic from the extraction.

**Table 7. Concentrations of elements in the solutions prior and after aluminium and fluoride extraction and in the loaded organic after extraction without scrubbing.**

| **Element** | **Unit** | **Supernatant stream** | **1^{st} raffinate** | **Loaded organic** |
|---|---|---|---|---|
| Al | mg/l | 3756 | 4 | 3094 |
| Co | mg/l | 29930 | 30 859 | 263 |
| Cu | mg/l | 453 | 411 | 27 |
| F | mg/l | 1844 | 48 | N/A |
| Fe | mg/I | < 1 | < 1 | < 1 |
| Mn | mg/l | 21 728 | 21 450 | 647 |
| Ni | mg/l | 33 136 | 35 488 | < 1 |

### Example 5: Comparative example for aluminium and iron impurity removal by precipitation

Precipitation process to separate iron and aluminium from the leachate solution is exemplified below.

Leachate was purified using continuous precipitation with three nine litres, series connected, agitated tanks. Tanks were heated to 51°C - 63°C and air flow into the bottom of the tanks was 0.7 I/min to ensure iron to be in Fe(III) form. Precipitation was controlled by adding 100 g/I NaOH to adjust pH to 5.1, 5.6 and 5.8 for the first, second and third tank respectively. Average total flow for leachate was 3.4 I/h and total flow of NaOH was 0.12 I/h. Iron seeds were mixed into leachate prior feeding to the first precipitation tank (23 g/h of dry seeds). Iron seeds had some impurities in them as it is shown in Table 9. Solid precipitation was filtered using Büchner funnel filter. Metal content of the solutions and solid impurity residue was analysed using inductive coupled plasma optical emission spectroscopy (ICP-OES), and the result is shown in Tables 8 and 9. High pH was required to lower aluminium concentration in the purified solution to few mg/l level. As a result, there were big losses of valuable metals (Ni, Cu and Co). Especially nickel loss differs greatly from Example 4, where nickel loss was negligible (significantly below 1 %) in the extraction, even without scrubbing.

**Table 8. Concentrations of elements in the solutions prior to and after iron and aluminium precipitation.**

| **Element** | **Unit** | **Leachate** | **Supernatant stream** |
|---|---|---|---|
| Al | mg/l | 628 | < 1 |
| Co | mg/l | 32 003 | 24 345 |
| Cu | mg/l | 332 | 5 |
| Fe | mg/l | 37 | < 1 |
| Mn | mg/l | 18 494 | 16 190 |
| Ni | mg/l | 25 966 | 18 835 |

**Table 9. Composition of the iron seeds and solid impurity residue as mass percentage after drying.**

| **Element** | **Unit** | **Seeds** | **Solid impurity residue** |
|---|---|---|---|
| **Al** | % | 0.1 | 2.6 |
| **Co** | % | 0.2 | 5.7 |
| **Cu** | % | 0.4 | 1.8 |
| **Fe** | % | 31.8 | 11.9 |
| **Mn** | % | < 0.1 | 1.3 |
| **Ni** | % | 0.4 | 18.1 |

### Example 6: Valuable metal separation

Continuous counter-current solvent extraction (SX) process to separate copper, manganese and cobalt from the 1^{st} raffinate main stream into separate 1^{st} stream of valuable metals.

1^{st} raffinate solution from which aluminium and iron was removed to 1 mg/l or below, was fed into solvent extraction process to separate copper, manganese and cobalt from the aqueous process solution. Separation is a solvent extraction process in which the organic phase contains 30 mass-% of bis(2,4,4-trimethylpentyl)phosphinic acid extractant in organic diluent (de-aromatised hydrocarbon solvent). Continuous solvent extraction was done in a laboratory scale solvent extraction setup using nine mixer-settler units (mixer volume 0.24 l and settler volume 1.0 l) at temperature of 30 °C. Organic phase was pre-neutralised in batches using 20.7 g of sodium hydroxide per one litre of organic solution prior feeding to the extraction. Three mixer-settlers were used for extraction, three for scrubbing and three for stripping. Flow of the aqueous phase was 0.35 I/h and organic phase 2.16 I/h, giving external organic to aqueous ratio of 6.2. Output solution, which is the 2^{nd} raffinate was at pH value 5.9. After extraction the solution was scrubbed with manganese sulphate solution (5 g/l as Mn) in three mixer-settlers and then stripped with 100 g/l of H₂SO₄ sulphuric acid in three stripping mixer settlers. Scrubbing was done at pH 4.4 - 4.9 and stripping product solution, i.e., the 1^{st} stream of valuable metals, was at pH value 3.6. Flow for the scrubbing solution was 0.38 I/h and stripping acid flow was 0.34 I/h. Analysis was done using inductive coupled plasma optical emission spectroscopy (ICP-OES), and analysis results of input and output solutions are shown in Table 10.

**Table 10. Concentrations of elements in the 1^{st} and 2^{nd} raffinate, and in the 1^{st} stream of valuable metals.**

| **Element** | **Unit** | **1^{st} raffinate** | **2^{nd} raffinate** | **1^{st} stream of valuable metals** |
|---|---|---|---|---|
| **Al** | mg/l | 15 | 1 | 14 |
| **Co** | mg/l | 36 943 | 1 | 33 662 |
| **Cu** | mg/l | 229 | < 1 | 263 |
| **Fe** | mg/l | < 1 | < 1 | < 1 |
| **Mn** | mg/l | 28 909 | 1 | 35 381 |
| **Ni** | mg/l | 32 203 | 27 571 | 260 |
| **Li** | mg/l | 12 251 | 10 529 | 3 |

### Example 7: Valuable metal separation

Another 1^{st} raffinate solution from which aluminium and iron was purified to under 1 mg/l was fed to the solvent extraction separation process. For the solution analysis, see Table 11. Separation is a solvent extraction process in which the organic phase contains 30 mass-% of bis(2,4,4-trimethylpentyl)phosphinic acid extractant in organic diluent (de-aromatised hydrocarbon solvent). Organic phase was pre-neutralised in batches using 18.9 g of sodium hydroxide per one litre of organic solution prior feeding to the extraction. Continuous solvent extraction was done in laboratory scale solvent extraction setup using 11 mixer-settler units (mixer volume 0.24 l and settler volume 1.0 l) at temperature of 30°C. Five mixer-settlers were used for extraction, three for scrubbing and three for stripping. Parameters and analysis results for the example are given as an average over 4 operating days. Average flow of the aqueous phase was 0.35 I/h and organic phase 1.61 I/h, giving external organic to aqueous ratio of 6.2. Output solution, the 2^{nd} raffinate was at pH value 5.9. After extraction the loaded organic was scrubbed with manganese sulphate solution (5 g/l as Mn) in three mixer-settlers and then stripped with sulphuric acid (50 g/l - 100 g/l) acid in three stripping mixer settlers. Average scrubbing solution pH value was 4.2 and average stripping product solution, i.e., the 1^{st} stream of valuable metals, pH value was 3.4. Average flow for of the scrubbing solution was 0.25 I/h and stripping acid flow was 0.60 I/h. Analysis was done using inductive coupled plasma optical emission spectroscopy (ICP-OES), and the analysis results are shown in Table 11.

**Table 11. Concentrations of elements in the 1^{st} and 2^{nd} raffinate, and in the 1^{st} stream of valuable metals.**

| **Element** | **Unit** | **1^{st} raffinate** | **2^{nd} raffinate^{a}** | **1^{st} stream of valuable metals^{a}** |
|---|---|---|---|---|
| **Al** | mg/l | 1 | < 1 | < 1 |
| **Co** | mg/l | 25 700 | 4 | 35 000 |
| **Cu** | mg/l | 11 | < 1 | 9 |
| **Fe** | mg/l | < 1 | < 1 | < 1 |
| **Mn** | mg/l | 17 000 | 8 | 21 300 |
| **Ni** | mg/l | 21 700 | 19 900 | 19 |
| **Li** | mg/l | 7 700 | 8 000 | < 1 |

| | | | | |
|---|---|---|---|---|
| ^{a} Average metal content analysis from four days continuous trial run | | | | |

### Example 8. Copper separation

Continuous ion exchange (IX) process was used to separate copper from the 1^{st} stream of valuable metals is exemplified below.

1^{st} stream of valuable metals, containing copper, manganese and cobalt sulphates was pumped through two series-connected ion exchange columns. Ion exchange resin in the columns was a weakly acidic, macroporous cation exchange resin with chelating iminodiacetic acid groups. Ion exchange columns were jacketed glass columns having an inner diameter of 15 mm. Experiment was done at 40°C and dry weight of the ion exchange resin in the column was 30.1 g. The resin was converted to hydrogen form using sulphuric acid at 200 g/l prior feeding the valuable metal solution to copper separation. Feeding was done at flow of 0.8 ml/min. For the whole experiment time of 430 minutes, the ion exchange output solution had Cu content below 1 mg/l, and manganese content after 430 minutes was 35 200 mg/l and cobalt content was 35 800 mg/l. After loading and rinsing the mother liquor out from the copper loaded column, elution was done at 2.8 ml/min flow rate for 84 minutes using 100 g/l sulphuric acid. Analyses of the feed and output solutions are shown in Table 12.

**Table 12. Concentrations of Co, Cu and Mn in the feed and separated solutions.**

| **Element** | **Unit** | **1^{st} stream of valuable metals** | **c.2 output solution** | **Cu-containing solution** |
|---|---|---|---|---|
| **Co** | mg/l | 35 400 | 35 800 | 30 |
| **Cu** | mg/l | 5 200 | < 1 | 1700 |
| **Mn** | mg/l | 35 900 | 35 200 | 2 |

### Example 9: Mn and Co separation

Continuous counter-current solvent extraction (SX) process was used to separate manganese from cobalt after the copper purification process is exemplified below.

Manganese and cobalt containing solution after copper separation, is fed into solvent extraction to separate manganese from cobalt. Organic phase in the solvent extraction contains 30 mass-% of di(2-ethylhexyl)phosphoric acid in organic diluent (de-aromatised hydrocarbon solvent). Continuous solvent extraction was done in laboratory solvent extraction pilot plant using 11 mixer-settler units (mixer volume 0.24 l and settler volume 1.0 I) at temperature of 30°C. Organic phase was pre-neutralised using 22.0 g of sodium hydroxide per one litre of organic solution and loaded with cobalt using 100 g/l as Co containing sulphate solution. The cobalt loaded organic was fed to the last extraction cell. Five mixer-settlers were used for extraction, three for scrubbing and three for stripping. Flow of the aqueous phase was 0.11 I/h and organic phase 1.11 I/h, giving external organic to aqueous ratio of 10. Co containing output solution had pH value 3.0. After extraction the loaded organic was scrubbed with manganese sulphate solution (20 g/l as Mn) in three mixer-settler cells and then stripped with 100 g/l sulphuric acid in three mixer-settlers. Scrubbing pH was about pH 3.1 and stripping product output from mixer-settler, i.e., the Mn-containing solution, was at pH 1.5. Flow for the scrubbing was 0.11 I/h and for the stripping it was 0.28 I/h. Purity of the separated solution are shown in Table 13.

**Table 13. Concentrations of Co and Mn in the input and separated product solutions.**

| **Element** | **Unit** | **c.2 output solution** | **Co-containing solution** | **Mn-containing solution** |
|---|---|---|---|---|
| **Co** | mg/l | 34 500 | 61 000 | 643 |
| **Mn** | mg/l | 27 000 | 21 | 55 100 |

### Example 10: Mn and Co separation

Manganese and cobalt containing solution after copper separation, is fed into solvent extraction to separate manganese and cobalt. Organic phase in the solvent extraction contains 30 mass-% of di(2-ethylhexyl)phosphoric acid in organic diluent (de-aromatised hydrocarbon solvent). Continuous solvent extraction was done in laboratory solvent extraction pilot plant using 11 mixer-settler units (mixer volume 0.24 l and settler volume 1.0 l) at temperature of 30 °C. Organic phase was pre-neutralised using 22.0 g of sodium hydroxide per one litre of organic solution and loaded with cobalt using 100 g/l as Co containing sulphate solution. The cobalt loaded organic was fed to the last extraction cell. Five mixer-settlers were used for extraction, three for scrubbing and three for stripping. Flow of the aqueous phase was 0.12 I/h and organic phase 1.1 I/h, giving external organic to aqueous ratio of 9. Output pH of the cobalt containing solution was 3.2. After extraction the loaded organic was scrubbed with manganese sulphate solution (20 g/l as Mn) in three mixer-settler cells and then stripped with 100 g/l sulphuric acid in three mixer-settlers. Scrubbing pH was about 3.1 and stripping product output from mixer-settler, i.e., the Mn-containing solution, was at pH 1.2. Flow for the scrubbing was 0.18 I/h and for the stripping it was 0.25 I/h. Purities of the separated solutions are shown in Table 14.

**Table 14. Concentrations of Co and Mn in the input and separated product solutions.**

| **Element** | **Unit** | **c.2 feed** | **c.2 output Co** | **c.2 output Mn** |
|---|---|---|---|---|
| **Co** | mg/l | 31 200 | 57 500 | 51 |
| **Mn** | mg/l | 23 800 | 570 | 49 000 |

## Claims

1. A process for recovering valuable metals from black mass, comprising
a. leaching, comprising
a.1.leaching the black mass by a strong acid and a reductant, thus producing a solid leaching residue and a leachate stream;
followed by
b. removing impurities, comprising one or more of
b.1. precipitating impurities from the leachate stream by using oxidation and adjusting pH, thus producing a solid impurity residue and a supernatant stream, and
b.2. extracting impurities by solvent extraction from the leachate stream or the supernatant stream using an impurity extractant, thus producing an impurity-containing solution or a plurality of impurity-containing solutions, and a first extraction raffinate;
followed by
c. recovering a first stream of valuable metals, comprising
c.1. separating a first stream of valuable metals by solvent extraction from the first extraction raffinate using a valuable metal extractant, thus producing said first stream of valuable metals and a second extraction raffinate,
wherein the first stream of valuable metals comprises at least copper, and may further comprise manganese and/or cobalt.

2. The process according to claim 1, wherein at least 60 wt-%, preferably at least 70 wt-%, more preferably at least 80 wt-%, even more preferably at least 90 wt-%, or most preferably at least 95 wt-% of copper originally present in the leachate is present in the first stream of valuable metals.

3. The process according to claim 1 or 2, wherein the removing impurities at b. comprises
b.1 precipitating impurities according to claim 1, followed by
b.2b extracting aluminium and fluoride by solvent extraction from the supernatant stream using the impurity extractant, thus producing the impurity-containing solution or the plurality of impurity-containing solutions and the first extraction raffinate; and/or
b.2a extracting iron by solvent extraction from the leachate stream using a first impurity extractant, thus producing an iron-containing solution and an iron-depleted stream, followed by
b.2b extracting aluminium and fluoride by solvent extraction from the iron-depleted stream using a second impurity extractant, thus producing the impurity-containing solution or the plurality of impurity-containing solutions and the first extraction raffinate; and/or
b.2 extracting iron, aluminium and fluoride by solvent extraction from the leachate stream using the impurity extractant, thus producing the impurity-containing solution or the plurality of impurity-containing solutions and the first extraction raffinate.

4. The process according to any of the preceding claims, wherein the first stream of valuable metals comprises copper, manganese and cobalt, and wherein the recovering the first stream of valuable metals at c. further comprises
c.2. separating copper from the first stream of valuable metals, preferably by ion exchange, thus producing a copper-containing solution and a stream comprising at least manganese and cobalt; optionally followed by
c.3. separating manganese and cobalt from the stream comprising at least manganese and cobalt by solvent extraction using a manganese extractant, thus producing a manganese-containing solution and a cobalt-containing raffinate.

5. The process according to any of the preceding claims, further comprising recovering a second stream of valuable metals from the second extraction raffinate, wherein the second stream of valuable metals comprises at least one or more of nickel and lithium, comprising one or more of
d. recovering nickel, comprising
d.1 separating nickel from the second extraction raffinate by solvent extraction using a nickel extractant, thus producing a nickel-containing solution and a third extraction raffinate,
d.2 separating nickel residues from the third extraction raffinate by ion exchange, and
d.3 separating remaining impurities from the third extraction raffinate by ion exchange; and
e. recovering lithium, comprising
e.1 separating lithium from the third extraction raffinate by precipitating using alkali metal carbonates, thus producing a solid lithium carbonate cake and a remnant stream, and
e.2 optionally separating remaining lithium from the remnant stream by ion exchange, thus producing a lithium-containing solution and a purified remnant stream.

6. The process according to any of the preceding claims, further comprising crystallizing sodium from the remnant stream or the purified remnant stream at f., thus producing a sodium salt, wherein the sodium salt comprises an anion that is a conjugate base of the strong acid used for leaching at a.1.

7. The process according to any of the preceding claims, wherein the strong acid at a.1 is selected from the group comprising sulphuric acid, hydrochloric acid, and any combination thereof, preferably sulphuric acid, and/or wherein the reductant at a.1 is selected from the group comprising sulphur dioxide, hydrogen peroxide, and any combination thereof, preferably sulphur dioxide; and/or wherein the leaching at a.1 further comprises adding an oxygen-containing gas, such as air.

8. The process according to any of the preceding claims, wherein the impurity extractant and the valuable metal extractant are individually selected from the group comprising phosphinic acids, preferably dialkyl phosphinic acids, more preferably bis(2,4,4-trimethylpentyl)phosphinic acid.

9. The process according to any of the preceding claims, wherein the same extractant is selected as the impurity extractant individually at any of b.2, b.2a, and b.2b, and as the valuable metal extractant at c.1.

10. The process according to any of claims 3 to 8, wherein the nickel extractant is selected from the group comprising phosphinic acids, phosphonic acids, phosphoric acids, neodecanoic acid, and any combination thereof, preferably wherein the nickel extractant is selected from the group comprising dialkyl phosphinic acids, dialkyl phosphonic acids, dialkyl phosphoric acids, neodecanoic acid, and any combination thereof, more preferably selected from bis(2,4,4-trimethylpentyl)phosphinic acid, di(2-ethylhexyl)phosphonic acid, di(2-ethylhexyl)phosphoric acid, and neodecanoic acid.

11. The process according to any of the preceding claims, wherein adjusting the pH at b.1 is carried out by adding a base, and/or wherein oxidation at b.1 is carried out by adding one or more selected from the group comprising an oxygen-containing gas, such as air, hydrogen peroxide, chlorates, persulphates, and any combination thereof.

12. The process according to any of the preceding claims, wherein one or more of
- separating impurities at any of b.1, b.2, b.2a, and b.2b,
- separating a first stream of valuable metals at c.1,
- separating copper at c.2,
- separating manganese and cobalt at c.3,
- separating nickel at d.1, and
- separating nickel residues at d.2
further comprises adjusting pH by adding a base , preferably wherein the base is selected from the group comprising hydroxides, such as sodium hydroxide, lithium hydroxide, potassium hydroxide, ammonium hydroxide, or any combination thereof.

13. The process according to any of the preceding claims, wherein, in one or more of the ion exchanges at
- separating copper at c.2,
- separating nickel residues at d.2,
- separating remaining impurities at d.3, and
- separating remaining lithium at e.2,
the ion exchange is performed using an ion exchange resin selected from the group comprising weak acid cation exchange resins, such as resins utilizing iminodiacetic acid groups in a styrenic matrix.
